# EUROPEAN PATENT SPECIFICATION

(11) **EP 2 933 899 B1**
(45) Date of publication and mention of the grant of the patent: **31.05.2017**
(21) Application number: 15163841.8
(22) Date of filing: 16.04.2015
(51) Int. Cl.: H02J 9/00

(54) **APPLIANCE AND CONTROL METHOD THEREOF**
VORRICHTUNG UND STEUERUNGSVERFAHREN DAFÜR
APPAREIL ET PROCÉDÉ DE COMMANDE DE CELUI-CI

(30) Priority: 17.04.2014 KR 20140046234
(43) Date of publication of application: 21.10.2015
(73) Proprietor: LG Electronics Inc., Yeongdeungpo-gu Seoul 150-721 (KR)
(72) Inventor: Kim, Saerom, 153-802 Seoul (KR); Kim, Sungchul, 153-802 Seoul (KR); Lee, Byeonghee, 153-802 Seoul (KR)
(74) Representative: Vossius & Partner Patentanwälte Rechtsanwälte mbB

(56) References cited:
- AU-A4- 2013 101 669
- US-A1- 2009 102 294
- US-A1- 2012 267 965
- US-A1- 2013 169 612

## Description

This application claims the priority benefit of Korean Patent Application No. 10-2014-0046234, filed on April 17, 2014 in the Korean Intellectual Property Office.

The present invention relates to an appliance and an operation method thereof, and more particularly, to an appliance and an operation method thereof, which satisfy standby power regulation while providing a power failure compensation function.

By virtue of rapid development of technology, high-tech appliances have been rapidly spread in each home.

Increase in number of devices increases use of power. When a power plug is connected to a socket, power is supplied to an appliance through a power circuit including a switching mode power supply (SMPS) from a time point when alternating current (AC) power is connected. Accordingly, irrespective of an operation state or standby state of the appliance, power is continuously supplied to the appliance such that predetermined standby power is also continuously consumed in a standby mode.

Recently, as issues in terms of energy conservation have become more important, standby power regulation has been reinforced. In order to satisfy standby power regulation of 0.5 watts, an appliance uses an existing power circuit of a standby-dedicated switching mode power supply (SMPS).

An appliance has a power failure compensation function. The power failure compensation function refers to a function whereby an operation is restarted from a time point when the operation is stopped rather than being started from the beginning when power is interrupted and then re-connected due to power failure or a voltage instability area. However, according to the existing power failure compensation function, standby power is not considered and thus there is a problem in that standby power of about 1 W is consumed.

A recent appliance includes a touchscreen that receives user touch input to control on/off of power. In this case, in order to design a power button in the form of a touchscreen, standby power regulation of 0.5 watts or less is satisfied using two SMPS circuits (e.g., Korean Patent Publication No. 10-0814020).

Therefore, the present invention has been made in view of the above problems, and it is an object of the present invention to provide an appliance and an operation method thereof, which satisfy standby power regulation while providing a power failure compensation function.

The object of the present invention is achieved by the features defined in the independent claims. Preferred embodiments are defined in the dependent claims.

In accordance with an aspect of the present invention, the above and other objects can be accomplished by the provision of an appliance including a load switch connected to a plurality of loads and for controlling power applied to the plurality of loads, a voltage output unit for outputting respective driving voltages appropriate for the plurality of loads when the load switch is in an on-state, a sub microcomputer for receiving a permanent driving voltage from the voltage output unit and transmitting a signal for switching of the load switch to an on-state upon receiving a power on signal, and a main microcomputer for controlling operations of the plurality of loads and for receiving a first driving voltage and transmitting a second signal for maintaining an on-state of the load switch to the load switch when the load switch is switched to the on-state.

In accordance with another aspect of the present invention, there is provided a method of operating an appliance, including applying an ordinary driving voltage to a sub microcomputer from a switching mode power supply (SMPS), transmitting a first signal for switching from a standby mode to an operation mode to a load switch by a sub microcomputer upon receiving a power on signal, applying a first driving voltage to a main microcomputer when the load switch is on, transmitting a second signal for maintaining an on-state of the lad switch to the load switch upon receiving the first driving voltage, and supplying power output from the voltage output unit to a plurality of loads in response to an on-state of the load switch.

The above and other objects, features and other advantages of the present invention will be more clearly understood from the following detailed description taken in conjunction with the accompanying drawings, in which:
FIG. 1 is a block diagram illustrating a configuration of an appliance according to an embodiment of the present invention;
FIG. 2 is a circuit diagram illustrating a circuit configuration of an appliance according to an embodiment of the present invention; and
FIG. 3 is a flowchart illustrating an operation method of an appliance according to an embodiment of the present invention.

Exemplary embodiments of the present invention will be described with reference to the attached drawings. The same reference numerals in the drawings denote the same elements.

The present invention will be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Throughout this specification, the same reference numerals in the drawings denote the same elements.

The terms used in the specification are used to describe embodiments of the present invention and should not limit the present invention. An expression used in the singular encompasses the expression of the plural, unless it has a clearly different meaning in the context. Also, it is to be understood that the terms such as "comprise" and/or "comprising" are intended to indicate the existence of components, and are not intended to preclude the possibility that one or more other components may exist or may be added.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In addition, the suffixes "module" and "unit" of elements herein are used for convenience of description and thus can be used interchangeably and do not have any distinguishable meanings or functions.

It will be understood that, although the terms first, second, etc. may be used herein to describe various elements of the present invention, these terms are only used to distinguish one element from another element and order of corresponding elements are not limited by these terms.

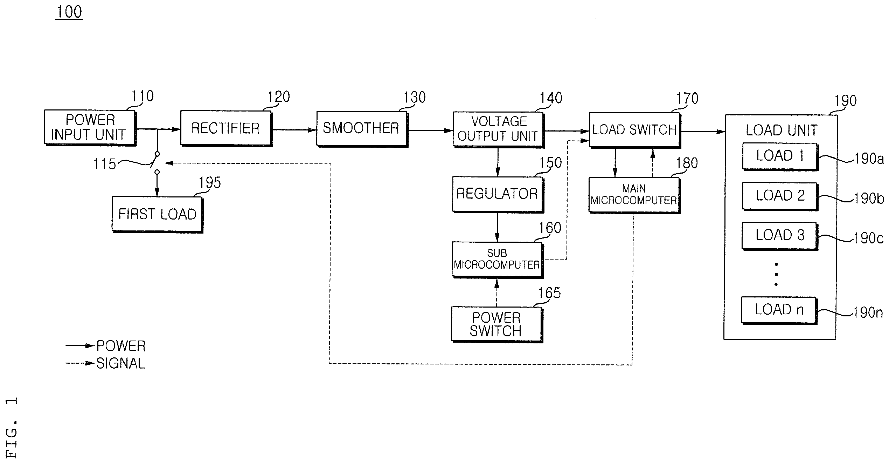

FIG. 1 is a block diagram illustrating a configuration of an appliance 100 according to an embodiment of the present invention.

Referring to FIG. 1, the appliance 100 according to an embodiment of the present invention includes a first load switch 115, a rectifier 120, a smoothing device 130, a voltage output unit 140, a regulator 150, a sub microcomputer 160, a power switch 165, a load switch 170, a main microcomputer 180, a load unit 190, and a first load 195.

A power input unit 110 supplies alternating current (AC) input power to the appliance 100 in a state in which a power plug is connected to a socket. The power input unit 110 may be a commercially available AC power source and may vary from country to country.

The rectifier 120 is connected between the power input unit 110 and the voltage output unit 140. The rectifier 120 full-wave rectifies or half-wave rectifies AC input power supplied from the power input unit 110. The rectifier 120 may be a circuit in which a plurality of diodes is configured in the form of a bridge. The AC input power supplied from the power input unit 110 is rectified through the rectifier 120 and is supplied to the smoothing device 130.

The smoothing device 130 is connected between the rectifier 120 and the voltage output unit 140. The smoothing device 130 includes at least one capacitor. The smoothing device 130 may convert power rectified through the rectifier 120 into predetermined magnitude of direct current (DC) power. The DC power converted by the smoothing device 130 into predetermined magnitude is supplied to the voltage output unit 140.

In some embodiments, the appliance 100 may further include a filter unit between the power input unit 110 and the rectifier 120. The filter unit (not shown) may be an electromagnetic interference (EMI) filter for removing noise component of AC input power supplied by the power input unit 110.

The voltage output unit 140 is connected to an output terminal of the smoothing device 130. The voltage output unit 140 may be a switching mode power supply (SMPS). The voltage output unit 140 outputs respective driving voltages appropriate for a plurality of loads 190 included in the appliance 100. That is, the voltage output unit 140 stably generates and outputs various levels of voltages required by the plurality of loads 190. For example, the voltage output unit 140 may output a DC voltage of 8 V, 12 V, 16.5 V, or 22 V. In this case, a voltage output from the voltage output unit 140 is applied to the plurality of loads 190. In this case, in order to satisfy standby power of 0.5 watts, a voltage of 12 V, 16.5 V, and 22 V may be restrictively applied in a standby mode.

The regulator 150 is connected to one of output terminals of the voltage output unit 140. The regulator 150 boosts or reduces a permanent driving voltage output from the voltage output unit 140 to a driving voltage appropriate for an operation of the sub microcomputer 160. The driving voltage that is boosted or reduced by the regulator 150 is applied to the sub microcomputer 160. For example, when the voltage output unit 140 outputs a permanent driving voltage of 8 V, the regulator 150 may reduce the permanent driving voltage to a driving voltage of 5 V appropriate for an operation of the sub microcomputer 160 and output the driving voltage to the sub microcomputer 160.

The sub microcomputer 160 is connected to an output terminal of the regulator 150. The sub microcomputer 160 receives a voltage obtained by boosting or reducing the permanent driving voltage output from the voltage output unit 140 by the regulator 150. When the power switch 165 receives a power on signal, the sub microcomputer 160 transmits a first signal to the load switch 170. Here, the first signal may be a signal for switching from a standby mode of the appliance 100 to an operation mode. The first signal may be a signal for converting the load switch 170 into an on-state. In some embodiments, upon receiving a power on signal, the sub microcomputer 160 may transmit the first signal to the load switch 170 only once.

The power switch 165 may be a user input switch. The power switch 165 may be a touch input unit that receives an input signal in a touch input manner. A user performs power on through the power switch 165. In this case, the power switch 165 transmits the power on signal to the sub microcomputer 160.

The load switch 170 is connected between the voltage output unit 140 and the plurality of loads 190. In order to satisfy standby power, the load switch 170 controls a DC voltage applied to the plurality of loads 190 from the voltage output unit 140. The load switch 170 receives the first signal from the sub microcomputer 160. In this case, the load switch 170 applies a first driving voltage to the main microcomputer 180. Here, the first driving voltage may be a DC voltage of 5 V.

The load switch 170 applies the first driving voltage to the main microcomputer 180 and receives a second signal from the main microcomputer 180 when the main microcomputer 180 wakes up. Here, the second signal is a signal for maintaining an on-state of the load switch 170. The load switch 170 continuously receives the second signal in a state in which the main microcomputer 180 wakes up. Upon receiving the second signal, the load switch 170 is maintained in an on-state and, accordingly, each output voltage output from the voltage output unit 140 is applied to the plurality of loads 190.

The main microcomputer 180 is connected to the load switch 170. When the first signal is input to the load switch 170 from the sub microcomputer 160, the load switch 170 is turned on. In this case, the main microcomputer 180 may receive the first driving voltage.

For example, when a load switched is turned on, the main microcomputer 180 may receive a first driving voltage of 5 V from the voltage output unit 140.

In some embodiments, when a load switch is turned on, the main microcomputer 180 may receive the first driving voltage that is output from the voltage output unit 140, applied to the regulator 150, and boosted or reduced by the regulator 150.

Upon receiving the first driving voltage, the main microcomputer 180 wakes up. In a wake-up state, the main microcomputer 180 transmits the second signal to the load switch 170. Here, the second signal is a signal for maintaining the load switch 170 to an on-state. The main microcomputer 180 continuously transmits the second signal to the load switch 170.

In a wake-up state, the main microcomputer 180 transmits a third signal to the first load switch 115. Here, the third signal is a signal for switching of the first load switch 115 to an on-state. When the first load switch 115 is turned on, AC input power supplied from the power input unit 110 is supplied to the first load 195.

The main microcomputer 180 controls operations of the plurality of loads 190 and the first load 195. When AC input power supplied from the power input unit 110 is interrupted and then re-supplied, input power is interrupted, and the main microcomputer 180 controls the plurality of loads 190 to operate subsequent to an operation in a stop state. That is, the main microcomputer 180 controls the plurality of loads 190 and the first load 195 to perform a power failure compensation function of the appliance 100.

The load unit 190 includes a plurality of loads 190a, 190b, 190c, ... 190n. When the load unit 190 is connected to the load switch 170 and the load switch 170 is turned on, the load switch 170 receives a DC voltage from the voltage output unit 140. Here, the plurality of loads 190 may be various sensors or electronic components disposed in an appliance. For example, with regard to a washing machine, the plurality of loads 190 may be an intelligent power module (IPM), a buzzer, a tub, an LED, a fan motor, a steam, TRIAC, a Hall sensor relay, and/or an LED included in a display unit.

The first load 195 may be a component that receives AC input power supplied from the power input unit 110 and is in an operating state. For example, with regard to a washing machine, the first load 195 may be a discharging resistor or hot/cold water. Here, when a power plug is not connected to a socket, the discharging resistor is a resistor for removing residual power in an appliance circuit. When a service engineer repairs the appliance 100, the appliance 100 may include a discharging resistor in order to prevent electric shock.

The first load switch 115 is connected between the power input unit 110 and the first load 195. The first load switch 115 controls AC input power supplied to the first load 195 from the power input unit 110. Upon receiving the third signal from the main microcomputer 180, the first load switch 115 is turned on to apply AC input power to the first load 195.

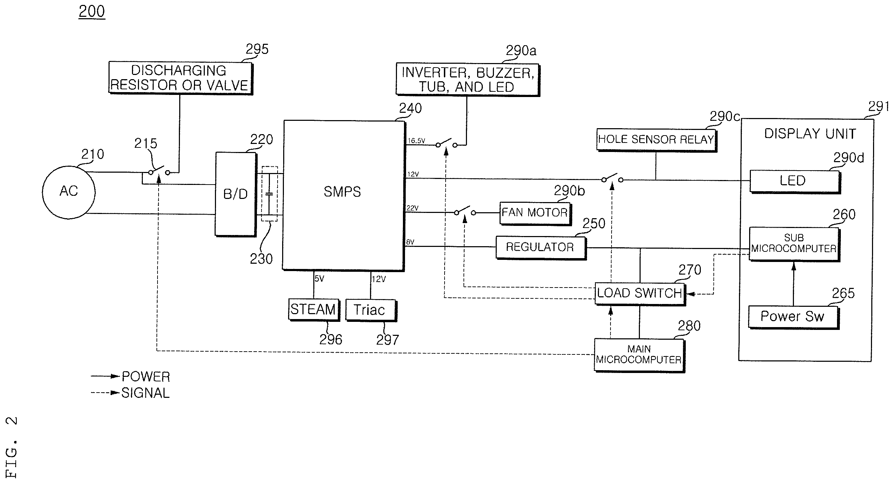

FIG. 2 is a circuit diagram illustrating a circuit configuration of an appliance according to an embodiment of the present invention.

In FIG. 2, the appliance is assumed to be a washing machine but is not limited thereto. It is obvious that the appliance may be any appliance including a television (TV), an air conditioner, a refrigerator, an electric rice cooker, a microwave, a robotic vacuum cleaner, etc. During the description of FIG. 2, the description of FIG. 1 is not repeated.

Referring to FIG. 2, a washing machine 200 includes a first load switch 215, a bridge diode 220, a smoothing device 230, an SMPS 240, a regulator 250, a sub microcomputer 260, a power switch 265, a load switch 270, a main microcomputer 280, and a plurality loads 290a, 290b, 290c, and 290d.

The bridge diode 220 includes first to fourth diodes that have a bridge circuit configuration. The bridge diode 220 full-wave rectifies or half-wave rectifies AC input power supplied from AC power 210.

The rectified input power is smoothed and converted into predetermined magnitude of DC power while passing through the smoothing device 230 including at least one capacitor.

The smoothed AC power is applied to the SMPS 240.

The SMPS 240 outputs DC voltages required for the respective loads. In some embodiments, the SMPS 240 outputs a voltage of 16.5 V to an inverter, buzzer, tub, and/or LED 290a. In addition, the SMPS 240 outputs a voltage of 22 V to a fan motor 290b. The SMPS 240 outputs a voltage of 12 V to a Hall sensor relay 290c. The SMPS 240 outputs a voltage of 12 V to an LED 290d included in a display unit 291. The SMPS 240 outputs a voltage of 5 V to a steam unit 296. In addition, the SMPS 240 outputs a voltage of 12 V to a TRIAC 297.

Here, in order to satisfy standby power regulation of 0.5 watts, a voltage of 16.5 V applied to the inverter, buzzer, tub, and/or LED 290a, a voltage of 22 V applied to the fan motor 290b, and a voltage of 12 V applied to the Hall sensor relay 290c or the LED 290d is not applied in a standby state and is applied only when the load switch 270 is turned on.

The regulator 250 receives a permanent driving voltage of 8 V from the SMPS 240. The regulator 250 reduces a permanent driving voltage of 8 V to a driving voltage of 5 V appropriate for an operation of the sub microcomputer 260. The regulator 250 applies a driving voltage of 5 V to the sub microcomputer 260.

The sub microcomputer 260 receives a driving voltage of 5 V from the regulator 250. In this case, while the AC power 210 is supplied, the regulator 250 continuously receives a driving voltage of 5 V. Upon receiving a power on signal from the power switch 265 according to user input, the sub microcomputer 260 transmits the first signal to the load switch 270. Here, the first signal may be a signal for switching from a standby mode to an operation mode. The first signal may be a signal for converting the load switch 170 to an on-state. When the first signal is received, the load switch 270 is converted to an on-state.

The power switch 265 may be a touch input unit for receiving user touch input. Upon receiving the user touch input, the power switch 265 transmits a power on signal to the sub microcomputer 260.

The load switch 270 receives the first signal from the sub microcomputer 260. In this case, the load switch 270 is converted into an on-state. When the load switch 270 is converted into an on-state, the load switch 270 supplies a first driving voltage of 5 V to the main microcomputer 280. Here, a first driving voltage of 5 V is a voltage obtained by reducing a permanent driving voltage output from the SMPS 240 by the regulator 250.

When the load switch 270 is converted into an on-state, the load switch 270 turns on a switch connected between the SMPS 240 and the inverter, buzzer, tub, and LED 290a. The load switch 270 turns on a switch connected between the SMPS 240 and the Hall sensor relay 290c or the LED 290d.

The main microcomputer 280 receives a first driving voltage of 5 V from the load switch 270. Upon receiving a first driving voltage of 5 V, the main microcomputer 280 wakes up. In a wake-up state, the main microcomputer 280 transmits the second signal to the load switch 270. Here, the second signal is a signal for maintaining the load switch 270 in an on-state. The main microcomputer 280 continuously transmits the second signal to the load switch 270 in an operation mode.

In a wake-up state, the main microcomputer 280 transmits the third signal to the first load switch 215. The third signal is a signal for converting the first load switch 215 to a steady-on-state.

When the first load switch 215 is converted to an on-state, AC input power is supplied to a discharging resistor or valve 295 from the AC power 210.

A plurality of loads includes the inverter, buzzer, tub, and/or LED 290a. When the load switch 270 is in an on-state, the inverter, buzzer, tub, and/or LED 290a receives a DC voltage of 16.5 V from the SMPS 240.

In addition, the plurality of loads includes the fan motor 290b. When the load switch 270 is in an on-state, the fan motor 290b receives a DC voltage of 22 V from the SMPS 240.

The plurality of loads includes the Hall sensor relay 290c and the LED 290d. When the load switch 270 is in an on-state, the Hall sensor relay 290c or the LED 290d receives a DC voltage of 12 V.

The washing machine 200 includes the steam unit 296 for receiving a DC voltage of 5 V from the SMPS 240.

The washing machine 200 includes the TRIAC 297 for receiving a DC voltage of 12 V from the SMPS 240.

The washing machine 200 according to an embodiment of the present invention includes the display unit 291. The display unit 291 may be configured as a touchscreen. Here, the touchscreen may function as an input unit and an output unit by configuring a touch pad and the display unit 291 with an interlayer structure. The display unit 291 may include the LED 290d, the sub microcomputer 260, and the power switch 265.

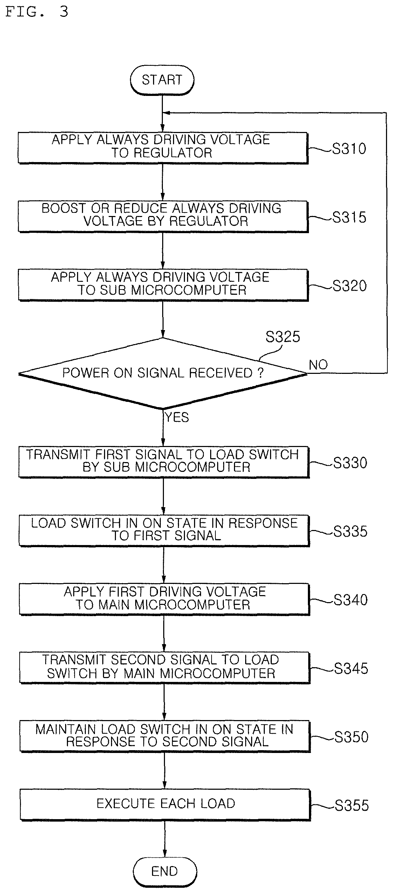

FIG. 3 is a flowchart illustrating an operation method of an appliance according to an embodiment of the present invention.

Referring to FIG. 3, an AC input voltage supplied from the power input unit 110 is rectified by the rectifier 120, smoothed by the smoothing device 130, and is converted into a predetermined level of DC voltage. The rectified and smoothed voltage is applied to the voltage output unit 140. A permanent driving voltage output from the voltage output unit 140 is applied to the regulator 150 (S310).

The regulator 150 boosts or reduces a driving voltage appropriate for an operation of the sub microcomputer 160 (S315).

The regulator 150 applies the boosted or reduced voltage to the sub microcomputer 160 (S320).

While a driving voltage is applied to the sub microcomputer 160, the sub microcomputer 160 determines whether a power on signal is received from the power switch 165 (S325).

Upon receiving the power on signal according to user input, the sub microcomputer 160 transmits the first signal to the load switch 170 (S330). Here, the first signal is a signal for converting a standby mode into an operation mode.

Upon receiving the first signal, the load switch 170 is converted into an on-state (S335).

When the load switch 170 is converted into an on-state, the first driving voltage output from the voltage output unit 140 is applied to the main microcomputer 180 (S340).

Upon receiving the first driving voltage, the main microcomputer 180 transmits the second signal to the load switch 170 (S345). Here, the second signal is a signal for maintaining the load switch 170 in an on-state.

Upon receiving the second signal, the load switch 170 is maintained in an on-state (S350). In this case, a DC voltage is applied to the plurality of loads 190 from the voltage output unit 140 and each load is operated under control of the main microcomputer 180.

Upon receiving the first driving voltage, the main microcomputer 180 transmits the third signal to the first load switch 115. Here, the third signal is a signal for converting the first load switch 115 into an on-state. When the first load switch 115 is in an on-state, AC input power supplied from the power input unit 110 is applied to the first load 195.

The aforementioned appliance and operation method thereof according to at least one embodiment of the present invention have the following advantages.

First, when power is interrupted due to power failure during an operation and then re-supplied, the appliance is re-operated from a time point when the operation is stooped, thereby enhancing user convenience.

Second, a circuit including one voltage output unit (e.g., an SMPS) is used, and thus manufacturing costs may be reduced while ensuring the same function as that of a circuit including two voltage output units.

Third, standby power regulation of standby power of 0.5 watts may be satisfied while using one voltage output (e.g., an SMPS).

It will be appreciated by persons skilled in the art that that the effects that could be achieved with the present invention are not limited to what has been particularly described hereinabove and other advantages of the present invention will be more clearly understood from the detailed description taken in conjunction with the accompanying drawings.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An appliance (100) comprising:
a load switch (170) connected to a plurality of loads (190a, 190b, 190c, ... 190n) and for controlling power applied to the plurality of loads (190a, 190b, 190c, ... 190n);
a Switching Mode Power Supply, SMPS, (140, 240), for outputting respective driving voltages appropriate for the plurality of loads (190a, 190b, 190c, ... 190n) when the load switch (170) is in an on-state;
a sub microcomputer (160) for receiving a permanent driving voltage and transmitting a signal for switching of the load switch (170) to an on-state upon receiving a power on signal; and
a main microcomputer (180) for controlling operations of the plurality of loads (190a, 190b, 190c, ... 190n) and for receiving a first driving voltage and transmitting a second signal for maintaining an on-state of the load switch to the load switch (170) when the load switch (170) is switched to the on-state,
wherein the permanent driving voltage and the first driving voltage are provided from the SMPS (140, 240).

2. The appliance (100) according to claim 1, wherein, when alternating current (AC) input power supplied from a power input unit (110) is interrupted and then re-supplied, input power is interrupted, and the main microcomputer (180) controls the plurality of loads to operate subsequent to an operation in a stop state.

3. The appliance (100) according to claim 1 or 2, further comprising a regulator (150) for boosting or reducing a permanent driving voltage output from the SMPS (140, 240) to a driving voltage appropriate for an operation of the sub microcomputer (160).

4. The appliance (100) according to claim 3, wherein:
the permanent driving voltage is 8 V; and
the regulator (150) is configured to reduce the permanent driving voltage to 5 V appropriate for the operation of the sub microcomputer (160).

5. The appliance (100) according to any of claims 1 to 4, further comprising a touch input unit,
wherein the sub microcomputer (160) receives a power on signal through the touch input unit.

6. The appliance (100) according to any of claims 1 to 5, further comprising:
a rectifier (120) for full-wave rectifying or half-wave rectifying AC input power supplied from a power input unit; and
a smoothing device (130) for smoothing the rectified power and applying the power to the SMPS (140, 240).

7. The appliance (100) according to any of claims 1 to 6, further comprising:
a first load (195) driven by the AC input power; and
a first load switch (115) for controlling power supplied to the first load (195),
wherein the main microcomputer (180) is configured to output a third signal for switching of the first load switch (115) to an on-state upon receiving first driving power.

8. The appliance (100) according to any of claims 1 to 7, wherein the first driving voltage is 5 V.

9. A method of operating an appliance, the method comprising:
applying a permanent driving voltage to a sub microcomputer (160);
transmitting a first signal for switching from a standby mode to an operation mode to a load switch (170) by a sub microcomputer (160) upon receiving a power on signal;
applying a first driving voltage to a main microcomputer (180) when the load switch is on;
transmitting a second signal for maintaining an on-state of the load switch (170) to the load switch (170) upon receiving the first driving voltage; and
supplying power output from a Switching Mode Power Supply, SMPS, (140, 240), to a plurality of loads (190a, 190b, 190c, ... 190n) in response to an on-state of the load switch (170),
wherein the permanent driving voltage and the first driving voltage are provided from the SMPS (140, 240).

## Patentansprüche

1. Vorrichtung (100) mit:
einem mit mehreren Lasten (190a, 190b, 190c, ... 190n) verbundenen Lastschalter (170) zum Steuern einer den mehreren Lasten (190a, 190b, 190c, ... 190n) zugeführten Leistung,
einem Schaltnetzteil, SMPS, (140, 240) zum Ausgeben jeweiliger Treiberspannungen, die für die mehreren Lasten (190a, 190b, 190c, ... 190n) geeignet sind, wenn der Lastschalter (170) auf einen eingeschalteten Zustand geschaltet ist;
einem Sub-Mikrocomputer (160) zum Empfangen einer permanenten Treiberspannung und zum Übertragen eines Signals zum Schalten des Lastschalters (170) auf einen eingeschalteten Zustand, wenn ein Einschaltsignal empfangen wird; und
einem Haupt-Mikrocomputer (180) zum Steuern von Operationen der mehreren Lasten (190a, 190b, 190c, ... 190n) und zum Empfangen einer ersten Treiberspannung und zum Übertragen eines zweiten Signals zum Aufrechterhalten eines eingeschalteten Zustands des Lastschalters an den Lastschalter (170), wenn der Lastschalter (170) auf den eingeschalteten Zustand geschaltet ist,
wobei die permanente Treiberspannung und die erste Treiberspannung durch das Schaltnetzteil, SMPS, (140, 240) bereitgestellt werden.

2. Vorrichtung (100) nach Anspruch 1, wobei, wenn eine von einer Stromversorgungseinheit (110) zugeführte AC-Eingangsleistung unterbrochen und dann erneut zugeführt wird, die Eingangsleistung unterbrochen wird und der Haupt-Mikrocomputer (180) die mehreren Lasten derart steuert, dass sie, nachdem der Betrieb gestoppt wurde, erneut in Betrieb genommen werden.

3. Vorrichtung (100) nach Anspruch 1 oder 2, ferner mit einem Regler (150) zum Verstärken oder Reduzieren einer vom Schaltnetzteil, SMPS, (140, 240) ausgegebenen permanenten Treiberspannung auf eine für einen Betrieb des Sub-Mikrocomputers (160) geeignete Treiberspannung.

4. Vorrichtung (100) nach Anspruch 3, wobei:
die permanente Treiberspannung 8 V beträgt, und
der Regler (150) dafür konfiguriert ist, die permanente Treiberspannung auf für den Betrieb des Sub-Mikrocomputers (160) geeignete 5 V zu reduzieren.

5. Vorrichtung (100) nach einem der Ansprüche 1 bis 4, mit einer Berührungseingabeeinheit,
wobei der Sub-Mikrocomputer (160) über die Berührungseingabeeinheit ein Einschaltsignal empfängt.

6. Vorrichtung (100) nach einem der Ansprüche 1 bis 5, ferner mit:
einem Gleichrichter (120) für eine Vollwellen-Gleichrichtung oder eine Halbwellen-Gleichrichtung einer von einer Stromversorgungseinheit zugeführten Eingangsleistung; und
einer Glättungseinrichtung (130) zum Glätten der gleichgerichteten Leistung und zum Zuführen der Leistung zum Schaltnetzteil, SMPS, (140, 240).

7. Vorrichtung (100) nach einem der Ansprüche 1 bis 6, ferner mit:
einer durch die AC-Stromversorgung betriebenen ersten Last (195); und
einem ersten Lastschalter (115) zum Steuern der der ersten Last (195) zugeführten Leistung,
wobei der Haupt-Mikrocomputer (180) dafür konfiguriert ist, nach dem Empfang der ersten Treiberspannung ein drittes Signal zum Schalten des ersten Lastschalters (115) auf einen eingeschalteten Zustand auszugeben.

8. Vorrichtung (100) nach einem der Ansprüche 1 bis 7, wobei die erste Treiberspannung 5 V beträgt.

9. Verfahren zum Betreiben einer Vorrichtung, wobei das Verfahren die Schritte aufweist:
Zuführen einer permanenten Treiberspannung zu einem Sub-Mikrocomputer (160);
Übertragen eines ersten Signals zum Schalten von einem Bereitschaftsmodus auf einen Betriebsmodus an einen Lastschalter (170) durch einen Sub-Mikrocomputer (160) beim Empfang eines Einschaltsignals;
Zuführen einer ersten Treiberspannung zu einem Haupt-Mikrocomputer (180), wenn der Lastschalter eingeschaltet ist;
Übertragen eines zweiten Signals zum Aufrechterhalten eines eingeschalteten Zustands des Lastschalters (170) an den Lastschalter (170) nach dem Empfang der ersten Treiberspannung; und
Zuführen einer von einem Schaltnetzteil, SMPS, (140, 240) ausgegebenen Leistung zu mehreren Lasten (190a, 190b, 190c, ... 190n) in Antwort auf einen eingeschalteten Zustand des Lastschalters (170),
wobei die permanente Treiberspannung und die erste Treiberspannung durch das Schaltnetzteil, SMPS, (140, 240) bereitgestellt werden.

## Revendications

1. Appareil (100) comprenant :
un commutateur de charge (170) connecté à une pluralité de charges (190a, 190b, 190c, ... 190n) et destiné à commander la puissance appliquée à la pluralité de charges (190a, 190b, 190c, ... 190n) ;
une alimentation à découpage, SMPS, (140, 240) pour émettre des tensions de commande respectives appropriées pour la pluralité de charges (190a, 190b, 190c, ... 190n) lorsque le commutateur de charge (170) est à l'état activé ;
un micro-ordinateur auxiliaire (160) pour recevoir une tension de commande permanente et transmettre un signal pour la commutation d'un commutateur de charge (170) à un état activé lors de la réception du signal d'allumage ; et
un micro-ordinateur principal (180) pour commander les opérations de la pluralité de charges (190a, 190b, 190c, ... 190n) et pour recevoir une première tension de commande et transmettre un second signal pour maintenir un état activé du commutateur de charge audit commutateur de charge (170) lorsque ledit commutateur de charge (170) est commuté à l'état activé,
dans lequel la tension de commande permanente et la première tension de commande sont fournies depuis la SMPS (140, 240).

2. Appareil (100) selon la revendication 1, dans lequel, lorsqu'une puissance d'entrée en courant alternatif (CA) fournie depuis une unité d'alimentation (110) est interrompue puis de nouveau fournie, la puissance d'entrée est interrompue et le micro-ordinateur principal (180) commande la pluralité de charges pour qu'elles fonctionnent suite à un fonctionnement en état d'arrêt.

3. Appareil (100) selon la revendication 1 ou 2, comprenant en outre un régulateur (150) destiné à augmenter ou réduire une tension de commande permanente émise depuis la SMPS (140, 240) à une tension de commande appropriée pour un fonctionnement du micro-ordinateur auxiliaire (160).

4. Appareil (100) selon la revendication 3, dans lequel :
la tension de commande permanente est de 8 V ; et
le régulateur (150) est configuré pour réduire la tension de commande permanente à la tension de 5 V appropriée pour le fonctionnement du micro-ordinateur auxiliaire (160).

5. Appareil (100) selon l'une quelconque des revendications 1 à 4, comprenant en outre une unité d'entrée tactile,
dans lequel le micro-ordinateur auxiliaire (160) reçoit un signal d'allumage à travers l'unité d'entrée tactile.

6. Appareil (100) selon l'une quelconque des revendications 1 à 5, comprenant en outre :
un redresseur (120) pour le redressement pleine-onde ou le redressement demi-onde de la puissance d'entrée CA fournie depuis une unité d'alimentation ; et
un dispositif de lissage (130) pour lisser la puissance redressée et appliquer l'alimentation à la SMPS (140, 240).

7. Appareil (100) selon l'une quelconque des revendications 1 à 6, comprenant en outre :
une première charge (195) commandée par la puissance d'entrée CA ; et
un premier commutateur de charge (115) pour commander la puissance fournie à la première charge (195),
dans lequel le micro-ordinateur principal (180) est configuré pour émettre un troisième signal pour la commutation du premier commutateur de charge (115) dans un état activé lors de la réception de la première puissance de commande.

8. Appareil (100) selon l'une quelconque des revendications 1 à 7, dans lequel la première tension de commande est de 5 V.

9. Procédé d'actionnement d'un dispositif, le procédé comprenant :
l'application d'une tension de commande permanente à un micro-ordinateur auxiliaire (160) ;
la transmission d'un premier signal, pour commuter d'un mode veille à un mode de fonctionnement, à un commutateur de charge (170) par le biais d'un micro-ordinateur auxiliaire (160) lors de la réception d'un signal d'allumage ;
l'application d'une première tension de commande à un micro-ordinateur principal (180) lorsque le commutateur de charge est allumé ;
la transmission d'un second signal pour le maintien d'un état activé du commutateur de charge (170) audit commutateur de charge (170) lors de la réception de la première tension de commande ; et
la fourniture de la puissance d'alimentation de l'alimentation à découpage, SMPS, (140, 240), à une pluralité de charges (190a, 190b, 190c, ... 190n) en réponse à un état activé du commutateur de charge (170),
dans lequel la tension de commande permanente et la première tension de commande sont fournies depuis la SMPS (140, 240).
